# EUROPÄISCHE PATENTANMELDUNG

(11) **EP 0 718 175 A1**
(43) Veröffentlichungstag der Anmeldung: **26.06.1996**
(21) Anmeldenummer: 95116028.2
(22) Anmeldetag: 11.10.1995
(51) Int. Cl.: B62D 25/14, B62D 65/00

(54) **Baueinheit für ein Kraftfahrzeug**

(30) Priorität: 20.12.1994 DE 4445381
(71) Anmelder: ROBERT BOSCH GMBH, 70442 Stuttgart (DE)
(72) Erfinder: Peter, Cornelius, Dipl.-Ing., D-77815 Buehl (DE); Frankenhauser, Bruno, Dr. Dr. Ing., D-73035 Goeppingen (DE); Jauernig, Peter, Dipl.-Ing., D-75233 Tiefenbronn (DE); Groesch, Lothar, Dr., D-70374 Stuttgart (DE)

(57) **Zusammenfassung**

Es wird eine Baueinheit zum Einsetzen in die Karosserie eines Kraftfahrzeugs vorgeschlagen. Die Baueinheit umfaßt im Motorraum (19) und im Cockpit (18) angeordnete Bauteile, die zu einem Modul (20) zusammengefaßt sind. Das Modul (20) wird an einem ersten Querträger (12) und einem zweiten Querträger (13) befestigt. Die Querträger (12, 13) werden nach dem Einsetzen des Moduls (20) in die Karosserie mit der Karosserie des Kraftfahrzeugs fest verbunden.

## Beschreibung

### Stand der Technik

Die Erfindung geht aus von einer Baueinheit für ein Kraftfahrzeug nach der Gattung des Hauptanspruchs. Auf dem Gebiet des Kraftfahrzeugbaus werden zunehmend einzelne Funktionseinheiten zu Systemen zusammengefaßt, die als Ganzes bei der Endmontage des Kraftfahrzeugs montierbar sind.

### Vorteile der Erfindung

Die erfindungsgemäße Baueinheit mit den kennzeichnenden Merkmalen des Hauptanspruchs hat den Vorteil, daß sowohl die Herstellungskosten der einzelnen Funktionseinheiten als auch die Kosten der Endmontage reduziert werden können. Aufgrund der konstruktiven Durchgängigkeit werden Synergien zwischen den verschiedenen Funktionseinheiten erreicht, die zur genannten Kosteneinsparung beitragen. Die Bereitstellung von Modulen für die Endmontage vereinfacht außerdem die Logistik. Der modulare Aufbau der Baueinheit wirkt sich außerdem günstig auf das Recycling der Baugruppen aus. Die Zusammenfassung der Funktionseinheiten zu einem Modul gestattet darüber hinaus ein schnelles Reagieren auf veränderte Marketing-Konzepte.

### Zeichnung

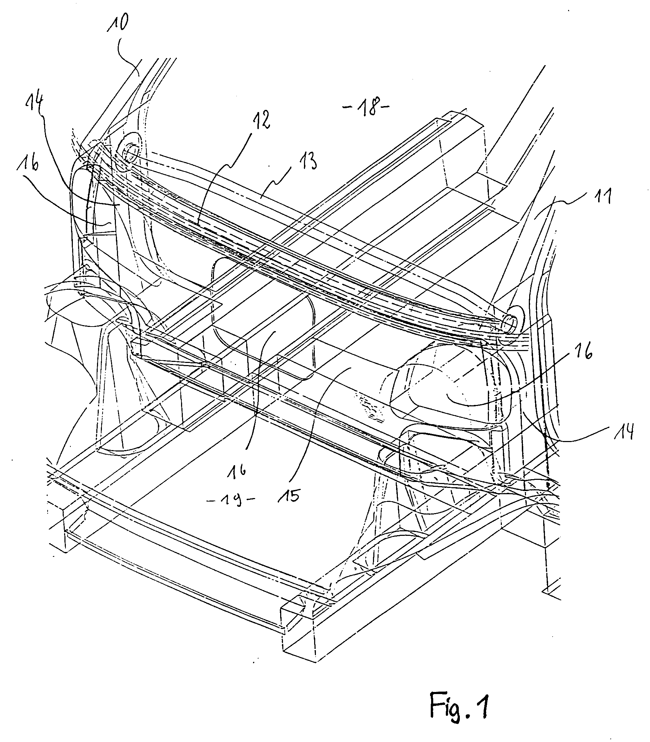

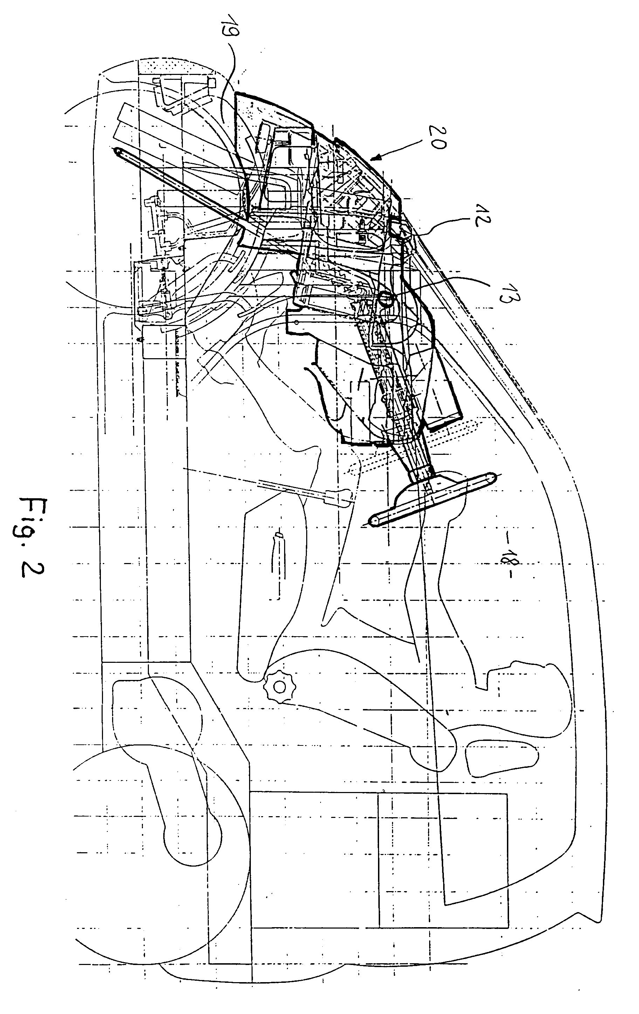

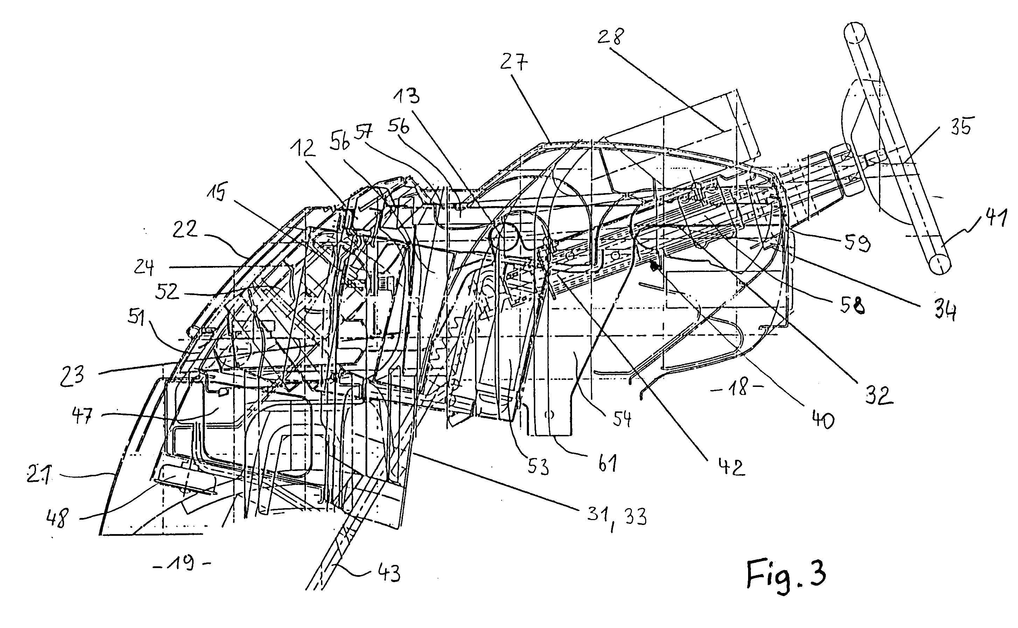

Ein Ausführungsbeispiel der Erfindung ist in der Zeichnung dargestellt und in der nachfolgenden Beschreibung näher erläutert. Es zeigen Figur 1 einen frontseitigen Ausschnitt eines Tragwerks einer Karosserie eines Kraftfahrzeuges, Figur 2 einen schematischen Querschnitt durch ein Kraftfahrzeug mit einem angedeuteten Modul und Figur 3 eine vergrößerte Darstellung des Moduls gemäß Figur 2.

### Ausführungsbeispiel

Der Skizze des Tragwerks gemäß Figur 1 ist eine rechte A-Säule 10 und eine linke A-Säule 11 einer Karosserie zu entnehmen. Die beiden A-Säulen 10, 11 sind mit einem ersten Querträger 12 verbunden. Cockpitseitig ist ein zweiter Querträger 13 angeordnet, der beispielsweise unterhalb der beiden A-Säulen 10, 11 an sich dort anschließenden Karosserieseiten 14 befestigt ist. Unterhalb des ersten Querträgers 12 verläuft eine Stirnwand 15, in der verschiedene Aussparungen 16 eingebracht sind. Die Stirnwand 15 trennt ein Cockpit 18 von einem Motorraum 19.

Figur 2 zeigt einen schematischen Querschnitt durch ein Kraftfahrzeug, wobei mehrere Funktionseinheiten zu einem Modul 20 zusammengefaßt sind. Die Abmessung und der Umfang des Moduls 20 ist dabei durch eine stärkere Umzeichnung hervorgehoben. Das Modul 20 kann jedoch auch andere Funktionseinheiten umfassen und kann auch aus mehreren einzelnen Modulen zusammengesetzt sein.

Das in Figur 2 dargestellte Modul 10 umfaßt gemäß Figur 3 folgende Funktionseinheiten:
ein Lüfungs-/Heizungsmodul 23, einen Wischerantrieb 24 mit einem nicht näher dargestellten Scheibenwischergestänge, eine Instrumententafel 27 mit einem Kombiinstrument 28, verschiedene Komponentengehäuse, wie beispielsweise einem Airbag-Steuergerät 31, einem Sicherungskasten 33 und einem Zündschalter 34, sowie einer Lenkanlage 40 mit einem Lenkrad 41, einer Lenksäule 42 und einer Lenkspindel 43. Im Lenkrad 41 ist ein Fahrerairbag 35 integriert. Das Lenkrad 41 ist auf der Lenksäule 43 axial verschiebbar angeordnet, so daß die Position des Lenkrads 41 individuell an den Fahrer angepaßt werden kann. Die Lenkspindel 43 führt zu einem nicht dargestellten Lenkgetriebe.

Das Modul 20 umfaßt im vorliegenden Ausführungsbeispiel weiterhin einen bzw. mehrere Kabelstränge für die elektrischen und elektronischen Funktionseinheiten des Moduls. Ferner umfaßt das Modul 20 einen Wasserbehälter 47 für eine Scheibenwaschanlage und ein Signalhorn 48. Frontseitig ist das Modul 20 von einer Motorraumklappe 22 und einer Außenverkleidung 21 begrenzt. Im Modul 20 integriert ist ferner die Stirnwand 15, wobei die einzelnen Baueinheiten durch die Aussparungen 16 geführt sind, so daß ein Teil der Baueinheiten im Motorraum 19 und ein anderer Teil der Baueinheiten im Cockpit 18 positioniert sind.

Das Lüftungs-/Heizungsmodul 23 ist kastenförmig mit einem Frischlufteinlaß 51, einem Gebläse 52, einem Wärmetauscher 53 und einem Luftverteilkasten 54 ausgeführt. Das Lüftungs-/Heizungsmodul 23 kann zusätzlich mit einem Verdampfer 55 einer Klimaanlage ausgerüstet sein. Der Luftverteilkasten 54 ist mit einer schienenförmigen Scheibenbelüftung 56 mit Belüftungsdüsen, einem Strömungsteil 58 mit Anströmdüsen 59 und mindestens einer Fußraumdüse 61 ausgeführt.

Zur Herstellung des Moduls 20 werden die aufgeführten Funktionseinheiten und Bauteile bzw. die gewünschten Funktionseinheiten und Bauteile zu einer kompakten Baueinheit zusammengefügt. Diese Baueinheit bildet das Modul 20, welches bei der Endmontage des Automobils in die Karosserie eingebaut wird.

Gemäß einer ersten Ausführungsform wird das Modul 20 vom Cockpit 18 her in die Karosserie eingesetzt, so daß die im Modul 20 integrierte Stirnwand 15 am ersten Querträger 12 anliegt. Die Stirnwand 15 wird am Querträger 12 und an den Seitenteilen 14 beispielsweise mittels nicht dargestellter Schnappverbindungen arretiert. Mit zusätzlichen, ebenfalls nicht dargestellten Befestigungselementen wird die Stirnwand 15 mit den Seitenteilen 14 der Karosserie, dem Querträger 12 und weiteren Karosserieteilen verbunden. Das cockpitseitige Teil des Moduls 10 stützt sich auf dem zweiten Querträger 13 ab, wobei der Querträger 13 selbst im Modul 20 integriert ist und erst nach dem Einsetzen des Moduls 20 mit den Karosserieseiten 14 fest verbunden wird.

Bei einer zweiten Ausführungsform enthält das Modul 20 sowohl den ersten Querträger 12 als auch den zweiten Querträger 13. Diese Ausführungsform gestattet, daß das Modul 20 vom Motorraum 19 her in die Karosserie einsetzbar ist. Nach dem Einsetzen des Moduls 20 in die Karosserie werden die beiden Querträger 12, 13 an den entsprechenden Stellen der Karosserie gemäß Figur 1 mit an sich bekannten Fügeverfahren bzw. Befestigungsmitteln befestigt.

## Patentansprüche

1. Baueinheit für ein Kraftfahrzeug, welche in eine Karosserie mit einem Motorraum und einem Cockpit einsetzbar ist, dadurch gekennzeichnet, daß Bauteile zu einem Modul (20) zusammengefaßt sind und daß Mittel vorgesehen sind, mit denen das Modul (20) mit der Karosserie verbindbar ist.

2. Baueinheit nach Anspruch 1, dadurch gekennzeichnet, daß die zu dem Modul (20) zusammengefaßten Bauteile motorraumseitig und cockpitseitig angeordnet sind.

3. Baueinheit nach Anspruch 1, dadurch gekennzeichnet, daß das Modul (20) eine Stirnwand (15) enthält, die das Cockpit (18) vom Motorraum (19) trennt.

4. Baueinheit nach Anspruch 3, dadurch gekennzeichnet, daß die Stirnwand (15) Mittel aufweist, mit denen die Stirnwand (15) an der Karosserie befestigbar ist.

5. Baueinheit nach Anspruch 3, dadurch gekennzeichnet, daß die Stirnwand (15) und/oder die Karosserie Schnappverbindungen aufweist, mit denen die Stirnwand mit der Karosserie verbindbar ist, wobei gegebenenfalls zusätzliche Befestigungselemente vorgesehen sind.

6. Baueinheit nach Anspruch 1, dadurch gekennzeichnet, daß im Modul (20) ein Querträger (13) integriert ist, der cockpitseitig mit der Karosserie verbindbar ist und an dem das Modul (20) befestigt ist.

7. Baueinheit nach Anspruch 1, dadurch gekennzeichnet, daß im Modul (20) ein erster Querträger (12) und ein zweiter Querträger (13) integriert sind, welche nach dem Einsetzten des Moduls (20) in die Karosserie mit der Karosserie fest verbunden werden, wobei das Modul (20) an den Querträgern (12, 13) befestigt ist.

8. Baueinheit nach Anspruch 1, dadurch gekennzeichnet, daß das Modul (20) als Bauteile im wesentlichen ein Heizungs-/Lüftungsmodul (23), einen Wischerantrieb (24), eine Instrumententafel (27) mit Kombiinstrumenten (28), Komponentengehäuse mit Funktionskomponenten und eine Lenkanlage enthält.

9. Baueinheit nach Anspruch 8, dadurch gekennzeichnet, daß das Modul (20) mit weiteren Bauteile erweiterbar ist.
